# EUROPÄISCHE PATENTSCHRIFT

(11) **EP 3 243 061 B1**
(45) Veröffentlichungstag und Bekanntmachung des Hinweises auf die Patenterteilung: **18.11.2020**
(21) Anmeldenummer: 16706966.5
(22) Anmeldetag: 06.01.2016
(51) Int. Cl.: G01N 11/00, B01L 7/00, G05D 23/00

(54) **TEMPERIERANORDNUNG MIT KOMBINATIONSWÄRMEÜBERTRAGER ZUR HEIZUNG UND KÜHLUNG EINER MESSPLATTE EINES MESSGERÄTES**
TEMPERATURE CONTROL ARRANGEMENT COMPRISING A COMBINATION HEAT EXCHANGER FOR HEATING AND COOLING A MEASUREMENT PLATE OF A MEASUREMENT DEVICE
DISPOSITIF DE RÉGULATION DE TEMPÉRATURE COMPRENANT UN ÉCHANGEUR DE CHALEUR COMBINÉ POUR CHAUFFER ET REFROIDIR UNE PLAQUE DE MESURE D'UN APPAREIL DE MESURE

(30) Priorität: 09.01.2015 DE 102015100278
(43) Veröffentlichungstag der Anmeldung: 15.11.2017
(73) Patentinhaber: AMETEK Germany GmbH, 64331 Weiterstadt (DE)
(72) Erfinder: GOLLA, Stefan, 01157 Dresden (DE); MARX, Eckard, 01471 Radeburg (DE); ZENKER, Stefan, Harlow, Essex CM17 0JL (GB); LOTZING, Helmut, 01458 Ottendorf-Okrilla (DE)
(74) Vertreter: Sperling, Thomas
(86) Internationale Anmeldenummer: PCT/DE2016/100005
(87) Internationale Veröffentlichungsnummer: WO 2016/110292

(56) Entgegenhaltungen:
- US-A1- 2008 029 248
- US-A1- 2009 126 373
- US-B1- 6 786 081

## Beschreibung

Die Erfindung betrifft eine Temperieranordnung mit Kombinationswärmeübertrager für Messgeräte, bei denen eine effiziente Kühlung und Heizung der Proben zur Messung von deren Eigenschaften erforderlich sind.

Die Bestimmung von Materialeigenschaften von Proben ist in der Regel eng verknüpft mit der Einhaltung definierter Randbedingungen bei der Anwendung der Messverfahren. Beispielsweise ist die Bestimmung der physikalischen Größe der Viskosität ganz entscheidend von der Temperatur der Probe abhängig. Somit besteht bei der Gestaltung von Rheometern zur Messung der Viskosität beispielsweise das Erfordernis, die Temperatur der Probe sehr präzise einzustellen, um exakte Parameter bestimmen zu können.

Weiterhin ist es beispielsweise bei der Bestimmung rheologischer Parameter häufig wünschenswert, auch eine Veränderung der Temperatur der Probe während der Messung vornehmen zu können. Zudem ist eine zeitlich schnelle Wärmezu- oder -abfuhr für die exakte Regelung der Temperatur wichtig.

Aus dem Stand der Technik sind Rheometer bekannt, welche somit die Möglichkeit der Erwärmung der zu vermessenden Fluide vorsehen.

Beispielsweise geht aus der WO 87/245 A1 ein Rheometer hervor, welches als Rotationsviskosimeter ausgestaltet ist und welches Mittel zur Induktionsheizung der Probenaufnahme besitzt, um die Probe zu erwärmen und mittels Regelung auf einer bestimmten Temperatur zu halten.

Aus der US 6,588,254 B1 geht ein Rotationsrheometer hervor, welches neben der Möglichkeit der Erwärmung der Proben auch die Möglichkeit der Probenkühlung vorsieht, wodurch sich weitere Anwendungsbereiche für das Messgerät ergeben.

In der US 2005/0199044 A1 wird schließlich eine Wärmeverteilvorrichtung für Rotationsrheometer offenbart, welche mit Peltier-Heizelementen und einer Kühlvorrichtung ausgestattet ist. In besonderer Weise wird dabei die Erwärmung und Kühlung der Probe von einer Oberseite und einer Unterseite gewährleistet, wobei Einflüsse in der Art eines Kamineffektes auf die Temperaturverteilung in der Probe weitgehend vermieden werden.

Im Stand der Technik ist aus der US 6,786,081 B1 eine Vorrichtung für eine direkte und/ oder entgegengesetzte Durchlaufkühlung bekannt.

In der US 2008/0029248 A1 ist eine Temperaturregelungssystem mit einer besonders glatten Wärmeaustauschfläche offenbart.

Im Stand der Technik ist außerdem in der US 2009/0126373 A1 eine Vorrichtung sowie ein Verfahren zum besonders schnellen Gefrieren von Proben beschrieben.

Im Stand der Technik ist unter anderem das Problem bekannt, dass die Charakteristik der Temperaturverteilung, die Dynamik und die Gleichmäßigkeit häufig nur ungenügend gelöst sind und dass das Regelverhalten bei der Erwärmung und bei der Kühlung der Proben in vielen Fällen nicht ausreichend und verzögert ist.

Ein weiterer Aspekt bei der Temperierung der Messgeräte besteht darin, dass die Laborgeräte überwiegend zur Heizung und Kühlung mittels Elektroenergie betrieben werden.

Die zugeführte Wärme für das Aufheizen auf relativ hohe Temperaturen als auch das schnelle und dauerhafte Kühlen und Halten von Temperaturen unterhalb der Umgebungstemperatur führen in kompakten oder geschlossenen Kreisläufen in Messsystemen zu einer Erhöhung der Systemtemperatur. Eine höhere Systemtemperatur kann zum einen kritisch für die gesamte Messanordnung durch Ausdehnung und Spaltbildung unter Lösen oder Schließen von thermischen Kontakten und zur Verstimmung der gekoppelten Messanordnung führen. Zum anderen wird durch eine höhere Systemtemperatur das Kühlverhalten im Einsatzgebiet erheblich beeinträchtigt. Beide Phänomene verschlechtern den Einsatzbereich oder erfordern aufwändige Gegenmaßnahmen.
Der geforderte energieeffiziente Einsatz für die Probentemperierung trägt zudem auch dem Aspekt der Gerätebetriebskostensenkung und dem sparsamen Energieverbrauch Rechnung. Dies sind wichtige Merkmale für den Umweltschutz und für die Anwender- beziehungsweise Kundenzufriedenheit.

Die Aufgabe der Erfindung besteht somit darin, eine Temperieranordnung für Messgeräte zur Verfügung zu stellen, welche hinsichtlich der Dynamik der Erwärmung und der Kühlung der zu untersuchenden Proben verbessert ist. Weiterhin soll der Energieverbrauch des Messgerätes für die Temperierung der Proben vermindert werden.

Die Aufgabe wird durch einen Gegenstand mit den Merkmalen gemäß den selbstständigen Patentansprüchen gelöst. Weiterbildungen sind in den abhängigen Patentansprüchen angegeben.

Die Aufgabe der Erfindung wird insbesondere durch eine Temperieranordnung mit Kombinationswärmeübertrager zur Heizung und Kühlung einer Messplatte eines Messgerätes gelöst, wobei die Messplatte auf einer Seite zur Aufnahme von Proben und auf der anderen Seite über einen Kombinationswärmeübertrager beheiz- und kühlbar ausgebildet ist. Der Kombinationswärmeübertrager ist aus einem gut wärmeleitfähigen Grundkörper mit einem von Kälteträger durchströmbaren Bereich mit innenliegenden Rippen sowie einem Fluideingang und einem Fluidausgang für den Kälteträger ausgebildet. Weiterhin sind im Grundkörper zur Aufnahme von Heizelementen Ausnehmungen angeordnet.
Unter einem Kombinationswärmeübertrager wird ein Wärmeübertrager verstanden, der sowohl heizen als auch kühlen kann, wobei den Wärmeübertrager zur Kühlung ein Fluid als Kälteträger durchströmt. Der Kälteträger nimmt über das Gehäuse Wärme von der thermisch kontaktierten Messplatte über innenliegende Rippen auf. Gleichzeitig sind im Gehäuse des Wärmeübertragers bevorzugt zylinderförmige Ausnehmungen zur Aufnahme von korrespondierend ausgebildeten Heizelementen vorgesehen. Das Gehäuse ist mit geringstem Materialeinsatz und damit geringster thermischer Masse beziehungsweise Speicherfähigkeit ausgeführt, um mit hoher Dynamik von Heizen auf Kühlen und umgekehrt umstellen zu können.
Weiterhin sind im Gehäuse des Wärmeübertragers endseitig an den Lamellen Umlenkbereiche für das Kälteträgerfluid ausgebildet, so dass ein mehrflutiger, mäanderförmiger Strömungspfad im Kombinationswärmeübertrager ausbildbar ist.

Es ist zwischen der Messplatte und dem Kombinationswärmeübertrager ein zum Heizen und Kühlen betreibbares Peltierelement angeordnet, welches den Heizvorgang neben dem Heizelement unterstützt und welches im Kühlbetrieb als aktives Kühlelement neben der Kühlung über Wärmeableitung an das Gehäuse und gegebenenfalls als zusätzliche externe Kühleinrichtung betreibbar ist.

Die Temperieranordnung ist bevorzugt auch dadurch gekennzeichnet, dass der Kombinationswärmeübertrager mit mindestens einem Kühler und einer Pumpe einen Kälteträgerkreislauf bildet, wobei der Kühler thermisch mit dem Gehäuse des Messgerätes zur Wärmeabgabe verbunden ist. Bei höherer gewünschter Dynamik ist zusätzlich ein zweiter Kühler seriell in den Kälteträgerkreislauf eingebunden.

Weiterhin vorteilhaft ist/sind der Kühler und/oder der Kombinationswärmeübertrager zusätzlich von Kühlluft umströmbar ausgebildet, wobei dann vorteilhaft Kühlrippen an der Außenseite des Wärmeübertragers angeordnet sind.

Der Kälteträgerkreislauf ist nach einer vorteilhaften Ausgestaltung der Erfindung zusätzlich über einen Zwischenkühler einer separaten externen Kühleinrichtung zur Kühlung des Kälteträgers kühlbar ausgebildet.

Bevorzugt sind in diesem Fall ein Kühler des Kälteträgerkreislaufes und der Zwischenkühler thermisch gekoppelt ausgeführt.

Konstruktiv sind die Wärmeübertrager Kombinationswärmeübertrager, Kühler und Zwischenkühler jeweils aus dem Grundkörper mit einem laserverschweißten Deckel und aus Kupfer ausgebildet.

Besonders bevorzugt ist der Grundkörper der Wärmeübertrager aus Kupfer ausgebildet, wodurch eine optimale Temperaturverteilung innerhalb des Kühlkörpers durch die Wärmeleitungseigenschaften von Kupfer erreicht wird.

Im flach als Block ausgeführten Grundkörper sind parallele Strömungskanäle für das Kälteträgerfluid ausgebildet, welche zwischenliegend durch Lamellen oder Rippen zur Vergrößerung der Wärmeübertragungsoberfläche voneinander getrennt sind. Die Kanäle enden in einem Umlenkbereich für das Kälteträgerfluid, wonach dieses in einem benachbarten Lamellenbereich zurückströmen kann.

Bei zusätzlicher Luftkühlung ist ein Ventilator zur Kühlung der Wärmeübertrager mit Kühlluft vorgesehen.

Ein besonders effizientes Betreiben einer Temperieranordnung für Messgeräte mit einem Kombinationswärmeübertrager wird durch das nachfolgend beschriebene Verfahren realisiert, wobei die Erwärmung der Probe bei vorgebbarer größerer Abweichung von Solltemperatur zu Probentemperatur mittels des elektrischen Heizelements erfolgt und erst bei vorgebbarer geringerer Abweichung von Solltemperatur zu Probentemperatur die Heizung über das Peltierelement erfolgt und dass dabei die Kühlung abgeschaltet ist.

Die Kühlung der Probe erfolgt nach Abschaltung des Heizsystems, wobei der Kälteträgerkreislauf die Wärme von der Messplatte über den Kombinationswärmeübertrager aufnimmt und über den oder die Kühler an das Gehäuse des Messgerätes zur freien konvektiven Wärmeabgabe an die Umgebung abgibt.

Bevorzugt wird Kühlung durch eine aktive Luftkühlung durch erzwungene Konvektion mittels Ventilator unterstützt.
Der Kühlprozess wird dadurch intensiviert, dass die Kühlung durch eine externe Kühleinrichtung unterstützt wird, welche mit dem Kälteträgerkreislauf thermisch gekoppelt ist.

Konzeptionsgemäß wird die Probe auf einer Messanordnung platziert, wobei die Messplatte, auch als Probeaufnahme bezeichnet, thermisch mit einem Heizsystem, dem Kombinationswärmeübertrager und/oder dem Peltierelement, kontaktiert ist.
Das Heizsystem erwärmt die Messplatte mit der Probe. Über eine Regelung ist eine Thermostatierung des Messsystems vorgesehen, wobei im Falle einer erforderlichen Kühlung die Wärmezufuhr über das Heizsystem gestoppt und mittels des Kälteträgerkreislaufes und gegebenenfalls dem Peltierkühler die Wärme von der Messplatte abgeführt wird. Der Kombinationswärmeübertrager als Bindeglied von Heizsystem und Kühlsystem leitet zunächst die im Kombinationswärmeübertrager selbst gespeicherte Wärme mittels des Kälteträgerfluids zu den Kühlern, welche die Wärme an das Gehäuse abgeben.

Der Kombinationswärmeübertrager ist derart ausgebildet, dass er möglichst eine geringe Wärmespeicherkapazität aufweist, so dass die dem Heizsystem zuvor zugeführte und im Wärmeübertrager gespeicherte Wärmeenergie möglichst gering ist und weniger Wärme dem Heizsystem entzogen werden muss.
Die Reduzierung der effektiven thermischen Massen ist ein entscheidendes Merkmal der Temperiereinrichtung, die somit ein besonders schnelles und damit effizientes Kühlen und Heizen ermöglicht.

Gemäß der Erfindung wird der elektrische Widerstandsheizer durch ein Peltierelement als Peltierheizer ergänzt. Hierbei befindet sich das Peltierelement zwischen der Messplatte und der Heizplattform mit den elektrischen Heizelementen. Da die elektro-thermische Reaktionszeit eines Peltierelements wesentlich geringer ist als die der massereicheren Heizelemente, ermöglicht diese Anordnung eine genauere Temperatursteuerung. Aufgrund der Tatsache, dass die Oberflächen der verwendeten Komponenten nicht perfekt planar sind, wird bevorzugt eine Wärmeleitfolie auf der Ober- und Unterseite des Peltierelements verwendet. Hier hat sich eine Graphitfolie bewährt, da diese weder hygroskopisch noch thermisch instabil ist und in ihrer Stärke Unebenheiten in der Weise ausgleicht, dass der Druck von Deformationen das Peltierelement nicht beschädigen.
Ein Verfahren zur Temperierung einer Probe in einem Messgerät mit einer Temperieranordnung ist dadurch gekennzeichnet, dass das Peltierelement nicht nur als Heizelement, sondern auch als thermischer Schalter fungiert, der zusätzlich bei Annäherung an die Zieltemperatur zur Feinregelung betrieben wird. Dieses Verfahren ist dem Prinzip geschuldet, dass das Peltierelement zwischen der Heizplattform und der Messplatte angeordnet ist, um eine Feinregelung durch seine erheblich geringere Regel-Reaktionszeit zu ermöglichen. Da im Gegensatz zu einem Kupfer-Wärmeleitträger-Messplatte-System ein Peltierelement passiv als thermischer Isolator wirkt, entsteht beim Heizvorgang ein sehr großer Temperaturunterschied zwischen Messplatte und Heizelement. Dies macht zum einen die Heizung sehr ineffizient und zum anderen können schnell Temperaturdifferenzen von über 60 Kelvin entstehen, die das Peltierelement zerstören. Weiterhin verkürzt sich die Lebensdauer des Peltierelements unter Volllastbetrieb beim Heizen erheblich über mehrere Größenordnungen von Stunden. Daher ist der Einsatz des Peltierelements in seiner Funktion als thermischer Schalter vorgesehen. Der Einsatz des Peltierelements beschränkt sich darin, die Wärmeleitung zwischen Kombinationswärmeübertrager und Messplatte zu verbessern, indem nur etwa eine Größenordnung geringere elektrische Leistung gegenüber dem Kombinationswärmeübertrager mit der Heizrichtung zur Messplatte in das Peltierelement gelenkt wird. Im Anwendungsfall hat sich der Wert von 1/20 als vorteilhaft erwiesen, wobei die Kühlung von Pumpe und Lüfter abgeschaltet wird.

Die Kühlung der Probe erfolgt nach Abschaltung des Heizsystems. Während der Kühlung muss die Wärme auf die Wärmesenke übertragen werden. Dies erfolgt über den Kälteträgerkreislauf, welcher nur während der Kühlungsphasen aktiv ist und nicht permanent arbeitet. Zusammen mit der Fluidkühlung und der geringen thermischen Masse der Wärmesenke, dem Kombinationswärmeübertrager, fungiert das Peltierelement ebenfalls als thermischer Schalter, der die Kühlung im Bereich oberhalb der Umgebungstemperatur fern der Volllast unterstützt. Erst bei Zieltemperaturen unterhalb der Umgebungstemperatur wird die volle Kühlleistung des Peltierelements ausgenutzt. Darüber hinaus wird das Peltierelement zur Feinregelung bei der Zieltemperatur eingesetzt. Dieses Verfahren reduziert den thermisch-mechanischen Stress für das Peltierelement, was zu einer Verlängerung der Lebensdauer im Vergleich zu herkömmlichen Kühlsystemen mit Peltierelementen führt.
Diese Verfahrensweise trägt erheblich zur Verbesserung der Energieeffizienz des Gesamtgerätes bei.

Im Unterschied zu Messgeräten nach dem Stand der Technik geht die Konzeption der Erfindung dahingehend, eine möglichst geringe thermische Speicherfähigkeit der Komponenten zu erreichen. Damit wird - im Vergleich zum Stand der Technik - eine vollständig andere Strategie verfolgt, weil nach dem Stand der Technik eine wesentliche Strategie bei der Temperierung von Proben in Messgeräten darin besteht, die thermische Masse möglichst groß zu halten, um Schwankungen gerade auszuschalten. Demgegenüber besteht ein großer Vorteil der Erfindung darin, dass durch die entgegengesetzte Reduzierung der thermischen Speicherfähigkeit der Temperieranordnung eine größere Flexibilität und eine Verbesserung der Dynamik des Regelvorganges der Temperatur erreicht werden kann. Dies ist vorteilhafterweise mit einer Reduzierung der eingesetzten Energie für den Temperiervorgang verbunden.

Eine weitere Kühlung erfolgt in der Regel je nach Kapazitätserfordernis alternativ über einen externen Kühlkreislauf, der direkt an die Messplatte oder an einen der Kühler des Kälteträgersystems angeschlossen ist.
Bevorzugt wird als Kälteträger ein Wärmeträgeröl, Heizöl oder eine Sole eingesetzt.

Konzeptionsgemäß ergeben sich diverse Vorteile aus der Gestaltung der erfindungsgemäßen Temperieranordnung. Zu nennen ist in erster Linie, dass die Dynamik der Regelung signifikant verbessert werden kann. Die einzelnen Komponenten der Temperieranordnung, wie das Kühlsystem und das Heizsystem, sind mit einer reduzierten thermischen Speichermasse ausgeführt, was zu einer Verbesserung der Dynamik des Temperierverhaltens führt. Weiterhin führt die Kombination geringer thermischer Massen bei der Wärmesenke und das Vorsehen einer Kühlung mittels eines geschlossenen Fluidkreislaufes als Kälteträgerkreislauf und einer Pumpe zu einer effizienten Kühlung der Probe. Das Kühlsystem und die Pumpe werden nur dann betrieben, wenn eine Kühlung erforderlich ist.

Weitere Einzelheiten, Merkmale und Vorteile von Ausgestaltungen der Erfindung ergeben sich aus der nachfolgenden Beschreibung von Ausführungsbeispielen mit Bezugnahme auf die zugehörigen Zeichnungen. Es zeigen:
- Fig. 1:: Draufsicht Wärmeübertrager,
- Fig. 2:: Seitenansicht Wärmeübertrager,
- Fig. 3:: Temperieranordnung für ein Rotationsviskosimeter vom Kegel-Platte-Typ,
- Fig. 4:: Wärmeübertragerkombination aus Kühler und Zwischenkühler und
- Fig. 5:: Messgerät.

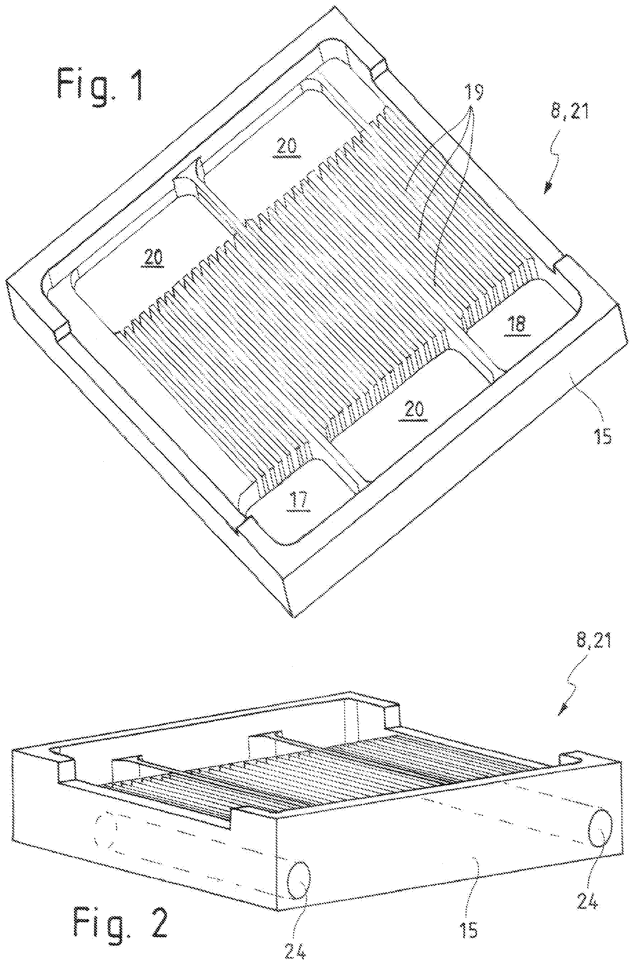

In Figur 1 und Figur 2 werden die Grundkörper 15 der Wärmeübertrager 8, 8.1, 21 perspektivisch in der Drauf- und in der Seitenansicht dargestellt. Der Wärmeübertrager besteht im Wesentlichen aus einem Grundkörper 15, der von einem nicht dargestellten Deckel verschließbar ist. Der Grundkörper 15 weist Rippen 19 auf, zwischen denen der Kälteträger von einem Fluideingang 17 zu einem Fluidausgang 18 über Umlenkbereiche 20 mäanderförmig mehrflutig strömt und dabei Wärme vom Grundkörper 15 aufnimmt.
Gemäß der dargestellten Ausführung ist der Grundkörper 15 als flacher Metallblock aus Kupfer oder Edelstahl ausgeführt. In den Metallblock sind im mittleren Bereich Fluidströmungskanäle eingearbeitet, zwischen denen Rippen 19 ausgebildet sind, die ihrer Lage nach als innenliegend bezeichnet werden. In den Randbereichen des Grundkörpers 15 sind Bereiche für den Fluideingang 17 und den Fluidausgang 18 ausgebildet, zwischen denen das Fluid einem Strömungspfad entlang der Rippen 19 und über Umlenkbereiche 20 zum Fluidausgang 18 folgt.
Insbesondere für den Kombinationswärmeübertrager 21 ist der Grundkörper 15 mit zwei Ausnehmungen 24 für zwei zylinderförmige Heizelemente jeweils seitlich entlang der Rippen 19 versehen. Die Heizelemente sind in die Ausnehmungen 24 einführbar und mit dem Grundkörper 15 über eine entsprechende Passung oder gegebenenfalls zusätzlich über Wärmeleitpaste oder Wärmeleitfolie thermisch kontaktierbar.

Die Heizelemente werden als Heizstäbe in die als Bohrung ausgeführte Ausnehmung 24 im Grundkörper 15 so eingelassen, dass diese vom Rand her den Grundkörper 15 in Richtung zum Peltierelement und zur Messplatte hin heizen. Dadurch stellt sich gegen den thermischen Verlust zum Rand hin eine thermisch homogene Heizfläche effektiv ein. Die Heizstäbe stehen dann in ihrer Anordnung auch nicht beim Kühlen durch die Flüssigkeit in den benachbarten Rippen 19 als thermischer Widerstand im Weg und die Höhe, und damit die effektive thermische Masse des Systems, ist dadurch sehr gering gehalten. Der nicht dargestellte aufgesetzte Deckel verfügt über Ösen, die über Federn frei an Bolzen zur Anbringung an der Messplatte geführt werden.

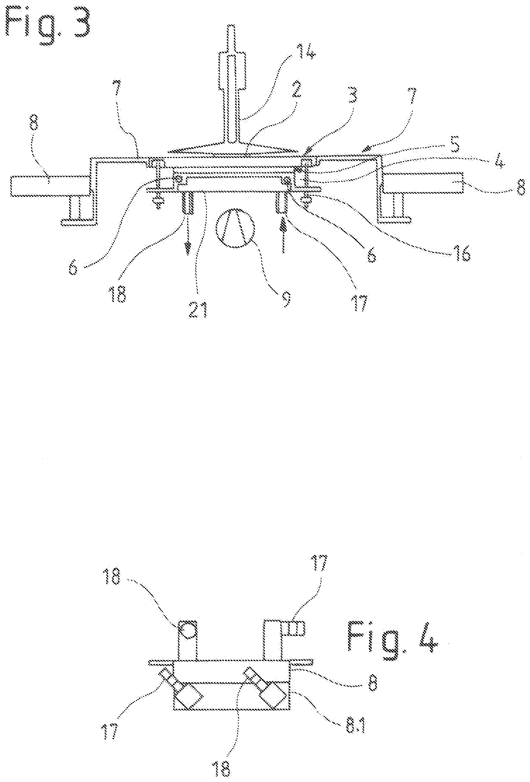

Das Heizungs- und Kühlsystem innerhalb der Temperieranordnung für Messgeräte gemäß Fig. 3 besitzt prinzipiell folgenden Aufbau:
Die Probe 2 ist auf der Messplatte 3 positioniert und wird von oben mit einem Rotationskegel 14 aus V4A-Stahl mechanisch beaufschlagt. Die Messplatte 3 besteht aus Wolfram-Carbid, hat einen PTC-Temperatursensor und ist an ihrer Unterseite thermisch verbunden mit einem Peltierelement 5. Das Peltierelement 5 ist wiederum auf der Unterseite mit einem Kombinationswärmeübertrager 21 verbunden, welcher Aufnahmen in Form von Ausnehmungen für elektrische Heizelemente 6 aufweist. Die Heizelemente 6 sind als Widerstandsheizer ausgeführt. Gegebenenfalls ist zwischen dem Peltierelement 5 und dem Kombinationswärmeübertrager 21 eine Wärmeleitfolie angeordnet, um den Wärmeübergang zwischen den Komponenten zu verbessern.

Die Wärme wird somit bei der Kühlung der Probe in vertikaler Richtung von unten nach oben schließlich der Probe 2 entzogen, da die Bestandteile der Temperieranordnung in dieser Richtung zueinander angeordnet sind.
Die Wärme wird somit von der Probe 2 über die Messplatte 3 und das Peltierelement 5 auf den Kombinationswärmeübertrager 21 übertragen, welcher mit seinem Metallgrundkörper über sehr gute Wärmeleitungseigenschaften verfügt und die Wärme dann über die in Fig. 1 dargestellen Rippen 19 an den Kälteträger effizient übertragen kann. Der Kombinationswärmeübertrager 21 ist über Gewindebolzen 16 sandwichartig mit dem Peltierelement 5 und der Messplatte 3 zum besseren Wärmeübergang verspannt. Der Kälteträger durchströmt den Kombinationswärmeübertrager 21 vom Fluideingang 17 zum Fluidausgang 18 und nimmt Wärme auf. Die Kühler 8 übertragen die Wärme schließlich auf das Gehäuse 7 des Messgerätes 1, wobei die Fluidverbindung zu den Kühlern 8 in Fig. 3 nicht dargestellt ist.

Für die zusätzliche Luftkühlung des Kombinationswärmeübertragers 21 ist ein Ventilator 9 unterhalb desselben angeordnet.

Zur Verbesserung der Wärmeübergänge sind zwischen der Messplatte 3 und dem Peltierelement 5 sowie zwischen dem Peltierelement 5 und dem Kombinationswärmeübertrager 21 eine Wärmeleitschicht 4 vorgesehen.

Fig. 4 zeigt eine Kombination von zwei Wärmeübertragern, dem Kühler 8 des Kälteträgerkreislaufes und dem Zwischenkühler 8.1 der externen Kühleinrichtung. Die Wärmeübertrager 8, 8.1 sind über eine nicht dargestellte Wärmeleitschicht oder metallisch fest verbunden, beispielsweise verschweißt. Weiterhin ist der Kühler 8, wie vorangehend beschrieben, mit dem Gehäuse über ein Wärmeleitmaterial verbunden. Die Wärmeübertrager weisen jeweils einen Fluideingang 17 und Fluidausgang 18 für die jeweils genutzten Fluide auf.

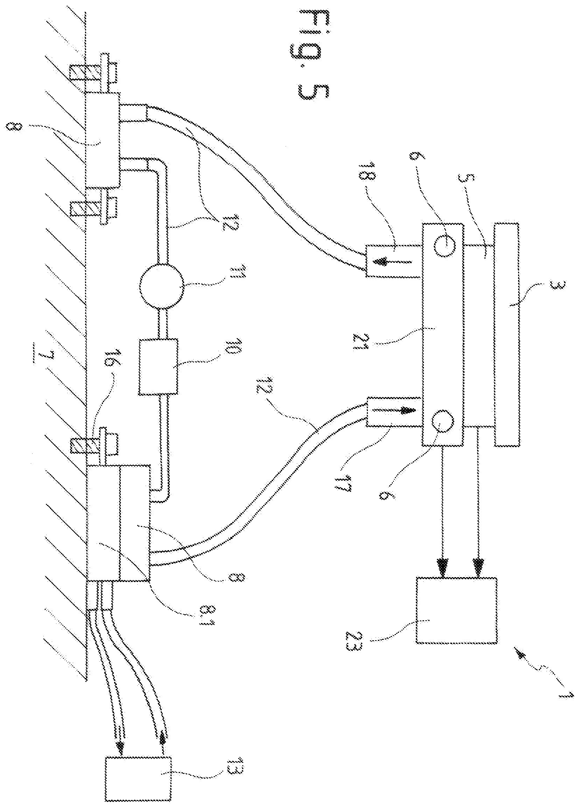

In Fig. 5 ist ein Messgerät 1 mit Temperieranordnung prinziphaft dargestellt. Oben ist die Messplatte 3 mit dem darunterliegenden Peltierelement 5 und dem Kombinationswärmeübertrager 21 positioniert. Über der Messplatte 3 und in dieser Darstellung nicht gezeigt, befinden sich auf der Oberseite die zu untersuchende Probe und der Rotationskegel des Messgerätes 1.

Der Kälteträgerkreislauf besteht gemäß der dargestellten Ausführungsform aus drei Wärmeübertragern, dem Kombinationswärmeübertrager 21 und zwei Kühlern 8 sowie einer Pumpe 11, einem Kälteträgerspeicher und einem Druckausgleichsbehälter 10, wobei die Komponenten über diverse Fluidleitungen 12 miteinander zur Bildung eines Kreislaufes verbunden sind.

Der Kombinationswärmeübertrager 21 wird über den Fluideingang 17 und den Fluidausgang 18 mit einem Wärmeöl als Kälteträger versorgt, da die Messungen an den Proben auch bei Temperaturen von über 200 °C erfolgen und Wasser oder Sole als Kälteträger damit nicht optimal sind. Die Kühler 8 sind mit dem Gehäuse 7 des Messgerätes 1 thermisch leitend verbunden, damit die vom Kälteträger transportierte Wärme jeweils über die Kühler 8 an das Gehäuse 7 des Messgerätes 1 abgegeben werden kann. Auf diese Weise ist eine Kühlung der Messplatte 3 im Bereich oberhalb des Umgebungstemperaturniveaus des Messgerätes 1 möglich. Reicht die Kühlkapazität dieses Kälteträgerkreislaufes und der Kühler 8 nicht aus, so kann das Kühlsystem des Messgerätes 1 durch eine zusätzliche externe Kühleinrichtung 13 unterstützt werden. Die thermische Verbindung zur externen Kühleinrichtung 13 erfolgt über einen Zwischenkühler 8.1, welcher in der Darstellung gemäß Fig. 5 direkt unter dem Kühler 8 angeordnet und mit diesem thermisch verbunden ist. Die Kühler 8, der Zwischenkühler 8.1 sowie der Kombinationswärmeübertrager 21 werden mit den anderen Komponenten jeweils mittels Gewindebolzen 16 verbunden, so dass mittels mechanischer Spannung und Flächenpressung ein guter Wärmeübergang zwischen den Komponenten realisierbar ist. Die Wärmeübertrager 8, 8.1 und 21 sind in ihrem Grundaufbau sehr ähnlich beziehungsweise verwenden sogar den identischen Grundkörper. Der Kombinationswärmeübertrager 21 weist funktionsgemäß zur Kombination von Heizung und Kühlung Heizelemente 6 auf, welche über entsprechende Verkabelungen mit der Steuer- und Regeleinrichtung 23 des Messgerätes 1 verbunden sind. Mit der Kombination von Heiz- und Kühlfunktion in einem Wärmeübertrager, dem Kombinationswärmeübertrager 21, ist eine sehr platzsparende und vor allem wirksame Lösung für die Temperierung der Messplatte des Messgerätes 1 realisiert.

Das Heizsystem ist typischerweise so ausgelegt, dass Messtemperaturen von zum Beispiel 200 °C mittels der Heizelemente 6 erreichbar sind. Dabei wird die Temperatur derart gesteuert, dass bis zu einer Temperatur von zirka 190 °C die Heizelemente 6 die Erwärmung der Messplatte 3 realisieren und die letzten zehn Kelvin vom Peltierelement mit dessen Heizfunktion mit einer sehr effizienten und wirksamen Steuerung realisiert werden. Die nur partielle Nutzung des Peltierelements für die letzte Phase der Heizung hat darüber hinaus den Vorteil, dass die Lebensdauer des Peltierelements 5 auf diese Weise stark erhöht werden kann, bei gleichzeitiger Nutzung der steuer- und regelungstechnischen Vorzüge und der Kompaktheit des Peltierelements als Komponente des Heizsystems.

Für die Kühlung wird das Heizsystem abgeschaltet und zunächst kann über den Kälteträgerkreislauf und die Abgabe der Wärmeenergie über die Kühler 8 an das Gehäuse 7 und damit an die Umgebung eine schnelle, ökologische sowie energiesparende Kühlung realisiert werden. Der Kühlprozess wird dann weiter unterstützt durch eine externe Kühleinrichtung 13, welche den Kälteträgerkreislauf über den Zwischenkühler 8.1 kühlt, da der Zwischenkühler 8.1 thermisch mit dem Kühler 8 verbunden ist und somit Wärme aus dem Kälteträgerkreislauf aufnehmen kann. Für eine Kühlung des Systems unterhalb der Umgebungstemperatur und zur Feinsteuerung der auf der Messplatte 3 einzustellenden Temperatur für die Probe kann mit dem Peltierelement 5, welches dann als Kühler arbeitet, eine Temperatur von -5 °C bis -15 °C eingestellt werden, was für die meisten Messaufgaben ausreichend ist. Vorteilhaft kann dabei wiederum die hohe Dynamik der Temperatursteuerung mittels des Peltierelements 5 genutzt werden.

Mit der dargestellten Temperieranordnung ist somit eine Heizung und eine Kühlung über einen weiten Temperaturbereich möglich. Eine hohe Dynamik bei Heizung und Kühlung wird insbesondere durch die Konstruktion des Grundkörpers des Kombinationswärmeübertragers 21 ermöglicht, da diese eine sehr geringe thermische Speicherfähigkeit und damit eine geringe thermische Trägheit bei einem Wechsel von kühlen auf heizen beinhaltet. Dieser Lösungsansatz steht im Gegensatz zu den im Stand der Technik verfolgten Regelungsstrategien, da dort überwiegend zur Vermeidung von regelungtechnischen Problemen eine hohe thermische Masse und damit verbundene Trägheit genutzt wird, um gleichbleibende Temperaturen zu realisieren.

### Bezugszeichenliste

- 1: Messgerät
- 2: Probe
- 3: Messplatte
- 4: Wärmeleitschicht
- 5: Peltierelement, Peltierheizer/-kühler
- 6: Heizelement
- 7: Gehäuse
- 8: Kühler, Wärmeübertrager
- 8.1: Zwischen kühler, Wärmeübertrager
- 9: Ventilator
- 10: Kälteträgerspeicher und Druckausgleichsbehälter
- 11: Pumpe
- 12: Fluidleitungen
- 13: externe Kühleinrichtung
- 14: Rotationskegel
- 15: Grundkörper
- 16: Gewindebolzen
- 17: Fluideingang
- 18: Fluidausgang
- 19: Rippen
- 20: Umlenkbereich
- 21: Kombinationswärmeübertrager, Wärmeübertrager
- 23: Steuer- und Regeleinrichtung
- 24: Ausnehmung im Grundkörper für Heizelement

## Patentansprüche

1. Temperieranordnung mit Kombinationswärmeübertrager (21) zur Heizung und Kühlung einer Messplatte (3) eines Messgerätes (1), wobei die Messplatte (3) auf einer Seite zur Aufnahme von Proben (2) und auf der anderen Seite über einen Kombinationswärmeübertrager (21) beheiz- und kühlbar ausgebildet ist und der Kombinationswärmeübertrager (21) aus einem gut wärmeleitfähigen Grundkörper (15) mit einem von einem Kälteträger durchströmbaren Bereich sowie einem Fluideingang (17) und einem Fluidausgang (18) ausgebildet ist und im Grundkörper (15) zur Aufnahme von Heizelementen (6) Ausnehmungen (24) angeordnet sind, in denen Heizelemente angeordnet sind, und wobei zwischen der Messplatte (3) und dem Kombinationswärmeübertrager (21) ein zum Heizen und Kühlen betreibbares Peltierelement (5) angeordnet ist, und wobei das Peltierelement zwischen der Messplatte (3) und den Heizelementen (6) passiv als thermischer Isolator wirkbar und als thermischer Schalter fungierend angeordnet ist, **dadurch gekennzeichnet, dass** der von einem Kälteträger durchströmbare Bereich des Grundkörpers (15) innenliegende Rippen (19) aufweist und dass die Temperieranordnung eine Steuer- und Regeleinrichtung (23) umfasst die dazu eingerichtet ist, dass die Heizung der Probe (2) bei vorgebbarer größerer Abweichung von Solltemperatur zu Probentemperatur mittels des elektrischen Heizelements (6) erfolgt und erst bei vorgebbarer geringerer Abweichung von Solltemperatur zu Probentemperatur die Heizung über das Peltierelement (5) erfolgt und dass die Kühlung abgeschaltet ist.

2. Temperieranordnung nach Anspruch 1, **dadurch gekennzeichnet, dass** die Ausnehmungen (24) zur Aufnahme von Heizstäben als Heizelemente (6) zylinderförmig ausgebildet sind.

3. Temperieranordnung nach Anspruch 1 oder 2, **dadurch gekennzeichnet, dass** Umlenkbereiche (20) bei mehrflutigem Strömungspfad im Kombinationswärmeübertrager (21) ausgebildet sind.

4. Temperieranordnung nach einem der Ansprüche 1 bis 3, **dadurch gekennzeichnet, dass** der Kombinationswärmeübertrager (21) mit mindestens einem Kühler (8) und einer Pumpe (11) einen Kälteträgerkreislauf bildet, wobei der Kühler (8) thermisch mit dem Gehäuse (7) des Messgerätes (1) zur Wärmeabgabe verbunden ist.

5. Temperieranordnung nach einem der Ansprüche 1 bis 4, **dadurch gekennzeichnet, dass** der Kühler (8) und/oder der Kombinationswärmeübertrager (21) zusätzlich von Kühlluft umströmbar ausgebildet ist/sind.

6. Temperieranordnung nach einem der Ansprüche 1 bis 5, **dadurch gekennzeichnet, dass** der Kälteträgerkreislauf zusätzlich über einen Zwischenkühler (8.1) einer separaten externen Kühleinrichtung (13) zur Kühlung des Kälteträgers kühlbar ausgebildet ist.

7. Temperieranordnung nach Anspruch 6, **dadurch gekennzeichnet, dass** der Kühler (8) und der Zwischenkühler (8.1) thermisch gekoppelt ausgeführt sind.

8. Temperieranordnung nach einem der Ansprüche 1 bis 7, **dadurch gekennzeichnet, dass** die Wärmeübertrager (21, 8, 8.1) jeweils aus dem Grundkörper (15) mit einem laserverschweißten Deckel und aus Kupfer ausgebildet sind.

9. Temperieranordnung nach einem der Ansprüche 1 bis 8, **dadurch gekennzeichnet, dass** bei zusätzlicher Luftkühlung ein Ventilator (9) zur Kühlung der Wärmeübertrager (21, 8, 8.1) mit Kühlluft vorgesehen ist.

10. Verfahren zum Betreiben einer Temperieranordnung für Messgeräte (1) mit einem Kombinationswärmeübertrager (21) nach einem der vorangehenden Ansprüche, wobei
- die Heizung der Probe (2) bei vorgebbarer größerer Abweichung von Solltemperatur zu Probentemperatur mittels des als elektrisches Heizelement ausgebildeten Heizelements (6) erfolgt und erst bei vorgebbarer geringerer Abweichung von Solltemperatur zu Probentemperatur die Heizung über das Peltierelement (5) erfolgt und dass die Kühlung abgeschaltet ist,
- die Kühlung der Probe (2) nach Abschaltung des Heizsystems erfolgt, wobei der Kälteträgerkreislauf die Wärme von der Messplatte (3) über den Kombinationswärmeübertrager (21) aufnimmt und über die Kühler (8) an das Gehäuse (7) abgibt.

11. Verfahren nach Anspruch 10, **dadurch gekennzeichnet, dass** die Kühlung durch eine Luftkühlung mittels Ventilator (9) unterstützt wird.

12. Verfahren nach Anspruch 10 oder 11, **dadurch gekennzeichnet, dass** die Kühlung durch eine externe Kühleinrichtung (13) unterstützt wird.

## Claims

1. Temperature control arrangement with combination heat exchanger (21) for heating and cooling a measuring plate (3) of a measuring device (1), where the measuring plate (3) is designed on one side to receive samples (2) and on the other side to be heatable and coolable via a combination heat exchanger (21) and the combination heat exchanger (21) is formed of a base body (15) having good thermal conductivity with a region through which a coolant can flow and a fluid inlet (17) and a fluid outlet (18) and in the base body (15) recesses (24) for receiving heating elements (6) are arranged, in which heating elements are arranged, and where between the measuring plate (3) and the combination heat exchanger (21) a Peltier element (5) operable for heating and cooling is arranged, and where the Peltier element is arranged between the measuring plate (3) and the heating elements (6), passively able to act as a thermal insulator and functioning as a thermal switch, **characterised in that** the region of the base body (15) through which a coolant can flow has internal ribs (19) and **in that** the temperature control arrangement comprises a control and regulating device (23) which is set up so that the heating of the sample (2) in the case of a predefinable larger deviation of target temperature from sample temperature is performed by means of the electric heating element (6) and only in the case of a predefinable smaller deviation of target temperature from sample temperature the heating is performed via the Peltier element (5) and that the cooling is switched off.

2. Temperature control arrangement according to claim 1, **characterised in that** the recesses (24) for receiving heating rods as heating elements (6) are cylindrically shaped.

3. Temperature control arrangement according to claim 1 or 2, **characterised in that** deflection regions (20) in the case of a multi-channel flow path are formed in the combination heat exchanger (21).

4. Temperature control arrangement according to one of claims 1 to 3, **characterised in that** the combination heat exchanger (21) with at least one cooler (8) and a pump (11) forms a coolant circuit, where the cooler (8) is thermally connected to the housing (7) of the measuring device (1) for heat dissipation.

5. Temperature control arrangement according to one of claims 1 to 4, **characterised in that** the cooler (8) and/or the combination heat exchanger (21) is/are additionally designed so that cooling air can flow around it/them.

6. Temperature control arrangement according to one of claims 1 to 5, **characterised in that** the coolant circuit is additionally designed to be coolable via an intermediate cooler (8.1) of a separate external cooling device (13) for cooling the coolant.

7. Temperature control arrangement according to claim 6, **characterised in that** the cooler (8) and the intermediate cooler (8.1) are designed thermally coupled.

8. Temperature control arrangement according to one of claims 1 to 7, **characterised in that** the heat exchangers (21, 8, 8.1) are each formed of the base body (15) with a laser-welded cover and of copper.

9. Temperature control arrangement according to one of claims 1 to 8, **characterised in that** in the case of additional air cooling a fan (9) is provided for cooling the heat exchangers (21, 8, 8.1) with cooling air.

10. Method for operating a temperature control arrangement for measuring the preceding claims, where
- the heating of the sample (2) in the case of a predefinable larger deviation of target temperature from sample temperature is performed by means of the heating element (6) designed as an electric heating element and only in the case of a predefinable smaller deviation of target temperature from sample temperature the heating is performed via the Peltier element (5) and the cooling is switched off,
- the cooling of the sample (2) is performed after switching off the heating system, where the coolant circuit absorbs the heat from the measuring plate (3) via the combination heat exchanger (21) and releases it via the cooler (8) to the housing (7).

11. Method according to claim 10, **characterised in that** the cooling is assisted by air cooling by means of a fan (9).

12. Method according to claim 10 or 11, **characterised in that** the cooling is assisted by an external cooling device (13).

## Revendications

1. Agencement de thermostatisation avec échangeur thermique combiné (21) servant à chauffer et refroidir une plaque de mesure (3) d'un appareil de mesure (1), sachant que la plaque de mesure (3) est configurée d'un côté pour recevoir des échantillons (2) et pour être chauffée et refroidie de l'autre côté via un échangeur thermique combiné (21), et que l'échangeur thermique combiné (21) est configuré à partir d'un corps de base (15) bon conducteur de la chaleur comprenant une zone pouvant être traversée par un fluide frigoporteur ainsi qu'une entrée (17) de fluide et une sortie (18) de fluide, et que dans le corps de base (15) sont disposés des évidements (24) destinés à recevoir des éléments chauffants (6), évidements dans lesquels sont disposés des éléments chauffants, et sachant qu'entre la plaque de mesure (3) et l'échangeur thermique combiné (21) est disposé un élément Peltier (5) exploitable pour chauffer et refroidir, et sachant que l'élément Peltier est disposé entre la plaque de mesure (3) et les éléments chauffants (6) pour agir passivement comme isolateur thermique, et pour officier d'interrupteur thermique, **caractérisé en ce que** la zone du corps de base (15) pouvant être traversée par un fluide frigoporteur présente des nervures intérieures (19) et **en ce que** l'agencement de thermostatisation présente un dispositif de commande et régulation (23) configuré de sorte que le chauffage de l'échantillon (2) a lieu par l'élément chauffant électrique (6) en cas de déviation importante, spécifiable, entre la température de consigne et la température de l'échantillon, et que seulement en cas de déviation moins importante entre la température de consigne et la température de l'échantillon le chauffage a lieu via l'élément Peltier (5) et que le refroidissement est éteint.

2. Agencement de thermostatisation selon la revendication 1, **caractérisé en ce que** les évidements (24) sont configurés de forme cylindrique pour recevoir des cartouches chauffantes (6) à titre d'éléments chauffants.

3. Agencement de thermostatisation selon la revendication 1 ou 2, **caractérisé en ce que** des zones de renvoi (20) sont configurées sur un itinéraire d'écoulement multiflux à l'intérieur de l'échangeur thermique combiné (21).

4. Agencement de thermostatisation selon l'une des revendications 1 à 3, **caractérisé en ce que** l'échangeur thermique combiné (21) comprenant au moins un radiateur (8) et une pompe (11) forme un circuit de fluide frigoporteur, sachant que le radiateur (8) est relié thermiquement avec le boîtier (7) de l'appareil de mesure (1) pour céder de la chaleur.

5. Agencement de thermostatisation selon l'une des revendications 1 à 4, **caractérisé en ce que** le radiateur (8) et/ou l'échangeur thermique combiné (21) est/sont configuré(s) pour être baigné(s) en plus par un flux d'air de refroidissement.

6. Agencement de thermostatisation selon l'une des revendications 1 à 5, **caractérisé en ce que** le circuit de fluide frigoporteur est configuré refroidissable en plus via un radiateur intermédiaire (8.1) d'un dispositif de refroidissement (13) externe séparé servant à refroidir le fluide frigoporteur.

7. Agencement de thermostatisation selon la revendication 6, **caractérisé en ce que** le radiateur (8) et le radiateur intermédiaire (8.1) sont réalisés thermiquement couplés.

8. Agencement de thermostatisation selon l'une des revendications 1 à 7, **caractérisé en ce que** les échangeurs thermiques (21, 8, 8.1) sont respectivement configurés à partir d'un corps de base (15) doté d'un couvercle soudé au laser et qu'ils sont en cuivre.

9. Agencement de thermostatisation selon l'une des revendications 1 à 8, **caractérisé en ce que** pour un refroidissement supplémentaire à l'air est prévu un ventilateur (9) pour refroidir les échangeurs thermiques (21, 8, 8.1) avec de l'air de refroidissement.

10. Procédé pour exploiter un agencement de thermostatisation pour appareils de mesure (1) comprenant un échangeur thermique combiné (21) selon l'une des revendications précédentes, sachant que
- le chauffage de l'échantillon (2) au moyen d'un élément chauffant (6) configuré en élément chauffant électrique a lieu en présence d'une déviation importante, spécifiable, entre la température de consigne et la température de l'échantillon, et que ce n'est qu'en cas de déviation moins importante, spécifiable, entre la température de consigne et la température de l'échantillon, que le chauffage a lieu via l'élément Peltier (5) et que le refroidissement est éteint,
- le refroidissement de l'échantillon (2) a lieu après coupure du système de chauffage, sachant que le circuit de fluide frigoporteur absorbe la chaleur de la plaque de mesure (3) via l'échangeur thermique combiné (21) et la cède au boîtier (7) via les radiateurs (8).

11. Procédé selon la revendication 10, **caractérisé en ce que** le refroidissement est assisté par un refroidissement par air au moyen d'un ventilateur (9).

12. Procédé selon la revendication 10 ou 11, **caractérisé en ce que** le refroidissement est assisté par un dispositif de refroidissement externe (13).
